# EUROPÄISCHE PATENTSCHRIFT

(11) **EP 2 129 048 B1**
(45) Veröffentlichungstag und Bekanntmachung des Hinweises auf die Patenterteilung: **13.07.2011**
(21) Anmeldenummer: 08009726.4
(22) Anmeldetag: 28.05.2008
(51) Int. Cl.: H04L 12/42, H04L 12/46, G05B 19/42, H04L 12/56, H04L 12/40

(54) **Verfahren zur Datenübertragung in einem Automatisierungssystem**
Method for data transmission in an automation system
Procédé de transmission de données dans un système d'automatisation

(43) Veröffentlichungstag der Anmeldung: 02.12.2009
(73) Patentinhaber: SIEMENS AKTIENGESELLSCHAFT, 80333 München (DE)
(72) Erfinder: Mendes Silva, Paulo, 2292 DC Wateringen (NL); Weber, Karl, Dr., 90518 Altdorf (DE)

(56) Entgegenhaltungen:
- EP-A- 1 505 784
- US-A1- 2003 134 590
- US-A1- 2004 208 575
- US-B1- 6 523 696

## Beschreibung

Die Erfindung betrifft ein Verfahren zur Datenübertragung in einem Automatisierungssystem mit einer Mehrzahl kommunikativ verbundener Kommunikationsteilnehmer. Aus der später in wesentlichen Teilen als WO2008092805A veröffentlichten DE 10 2007 004 306.8 der Anmelderin der vorliegenden Erfindung ist eine Netzwerkkomponente, ein Verfahren zum Betrieb einer solchen Netzwerkkomponente, ein Automatisierungssystem mit einer solchen Netzwerkkomponente sowie ein Verfahren zur Datenübermittlung in einem Automatisierungssystem unter Verwendung einer solchen Netzwerkkomponente bekannt. Die hier beschriebene Erfindung ist eine Weiterentwicklung der in der vorgenannten DE 10 2007 004 306.8 beschriebenen Erfindung.

Die EP 1 505 784 A beschreibt ein auf dem IEEE-1394 Standard basierendes, ringförmiges Kommunikationsnetwerk für den Heimanwendungsbereich. Das Netzwerk weist einen Einleitungspunkt auf, über den von einem externen Netzwerk eintreffende Telegramme an von dem Heimnetzwerk umfasste Kommunikationsteilnehmer weitergeleitet werden können. Die US 6,523,696 B beschreibt im Wesentlichen die Funktionalität einer Schnittstelleneinheit, die als Übergang zwischen zwei Netzwerken fungiert und Information aus einem der beiden Netzwerke sammelt und in dem anderen Netzwerk verfügbar macht. Die US 2004/0208575 A beschreibt ein optisches Ringnetz, bei dem aus Redundanzgründen eine Übermittlung übertragener Telegramme stets bidirektional erfolgt.

Während die DE 10 2007 004 306.8 ein besonders günstiges Verfahren zur Datenübermittlung in einem Automatisierungssystem, eine dafür vorgesehene Netzwerkkomponente, usw. betrifft, bezieht sich die hier beschriebene Erfindung auf ein Verfahren zur Datenübertragung, das auch dann noch sicher funktioniert, wenn in dem Automatisierungssystem Kommunikationsverbindungen teilweise unterbrochen sind. Verfahren zur redundanten Übermittlung von Daten sind zwar ebenfalls bekannt, aber die hier vorgeschlagene redundante Übermittlung von Daten basiert darauf, dass die kommunikative Verbindung der Kommunikationsteilnehmer einer vorgegebenen Hierarchie folgt, wie sie in der DE 10 2007 004 306.8 beschrieben ist, dass jedem Kommunikationsteilnehmer ein an die Hierarchie angepasster Alias zugeordnet ist, wie ebenfalls in der DE 10 2007 004 306.8 beschrieben, und dass im Automatisierungssystem versandte Frames, die im folgenden synonym auch als Telegramme bezeichnet werden, einen Empfänger oder Zielkommunikationsteilnehmer zumindest auch anhand dessen Alias bezeichnen.

Der Erfindung liegt als Aufgabe zugrunde, die in der DE 10 2007 004 306.8 bzw. WO2008092805A beschriebene Hierarchie und die daran angepasste Zuordnung von Aliasbezeichnungen auch für eine optimierte redundante Übermittlung von Telegrammen nutzbar zu machen. Dazu ist vorgesehen, dass sich in der Hierarchie der kommunikativ verbundenen Kommunikationsteilnehmer ergebende Einleitungspunkte als Verteilpunkte zur Erzeugung redundanter Telegramme fungieren, wobei die sich entsprechend der Netzwerktopologie ergebenden Linien Hierarchieebenen bilden und Einleitungspunkte auch als Übergänge zwischen den Hierarchieebenen fungieren. Jede Linie wird über deren Einleitungspunkt oder, im Falle redundanter Netzübergänge, über mehrere Einleitungspunkte zu einem Ring geschlossen und ein Telegramm wird in der Linie sowohl in Richtung der Hierarchie der vergebenen Aliasbezeichnungen als auch in Gegenrichtung weitergeleitet. Dies gewährleistet, dass von der Linie umfasste Kommunikationsteilnehmer von dem im Einleitungspunkt duplizierten Telegramm in jedem Fall erreicht werden, auch wenn entlang der ursprünglichen Linie, also vor deren Schließung zu einem Ring über den Einleitungspunkt, eine Verbindung unterbrochen ist. Gleiches gilt, wenn das Telegramm an einen Kommunikationsteilnehmer gerichtet ist, der in einer der zu einem Ring geschlossenen unmittelbar oder mittelbar nachfolgenden Linie angeordnet ist. Dann wird der Einleitungspunkt dieser Linie entweder in Richtung der vergebenen Aliasbezeichnungen oder in Gegenrichtung erreicht, so dass auch in diesem Falle die Weiterleitung des Telegramms selbst im Falle von Verbindungsunterbrechungen sichergestellt ist.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin; sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Bevorzugt ist vorgesehen, dass Telegramme beim nochmaligen Erreichen eines bereits passierten Kommunikationsteilnehmers, insbesondere eines Einleitungspunktes, eliminiert werden. Damit wird erreicht, dass es zu keinen fortwährend zirkulierenden Telegrammen (oder Frames) kommt. Wenn nämlich ein versandtes Telegramm aufgrund redundanter Übermittlung wieder beim ursprünglichen Sender ankommt, würde dieser es nach Auswertung der Aliasbezeichnungen "normal" weiterleiten, so dass es aufgrund der redundanten Übermittlung schließlich erneut beim ursprünglichen Sender eintrifft, usw. Im Ergebnis wird durch das Eliminieren solcher Telegramme erreicht, dass die durch die redundante Versendung (Duplizierung) von Telegrammen unvermeidliche Erhöhung der Kommunikationslast auf ein Minimum begrenzt wird.

Wenn das Telegramm einen bereits passierten Kommunikationsteilnehmer erreicht, ist klar, dass das Telegramm einmal bei sämtlichen von einem Ring umfassten Kommunikationsteilnehmern empfangen wurde, so dass der sichere Erhalt der mit dem Telegramm transportierten Nutzdaten bei den vorgesehenen Empfängern sichergestellt ist. Besonders bevorzugt ist vorgesehen, dass nur die als Einleitungspunkte fungierenden Kommunikationsteilnehmer prüfen, ob ein Telegramm empfangen wird, das bereits einmal bearbeitet wurde. Dann sind andere, von der Linie umfasste Kommunikationsteilnehmer von derartigen Verwaltungsaufgaben entlastet. Zudem macht eine Prüfung gerade im Bereich der als Einleitungspunkte fungierenden Kommunikationsteilnehmer vor dem Hintergrund, dass sich eine evtl. redundante Versendung desselben Telegramms gerade in diesem Gerät ergibt, Sinn.

Zum Eliminieren solcher Telegramme, die einen Kommunikationsteilnehmer, einen Einleitungspunkt, bereits einmal passiert haben, werden grundsätzlich Bezeichner ausgewertet, die den Sender des jeweiligen Telegramms kodieren. Nachdem in einer Kommunikationsbeziehung zwischen demselben Sender- und Empfängerpaar auch in vergleichsweise kurzer Zeit eine Vielzahl von Telegrammen entstehen kann, ist weiter bevorzugt vorgesehen, dass den Telegrammen, zumindest aber einem Telegramm ab einer redundanten Versendung, also dem ursprünglichen Telegramm und dem Telegrammduplikat, eine Sequenznummer zugeordnet wird und Telegrammduplikate anhand gleicher Sequenznummern erkannt und eliminiert werden.

Zur Begrenzung des Datenaufkommens und des Verwaltungsaufwands bei der Speicherung verwendeter Sequenznummern ist vorgesehen, dass vergebene Sequenznummern in einem Vektor vermerkt und ein mit einer Sequenznummer empfangenes Telgramm anhand des Vektors ggf. als Duplikat erkannt und eliminiert wird. Anstatt einer Tabelle mit einer Vielzahl von Sequenznummern ist dann zur Duplikaterkennung nur noch der Vektor vorzuhalten, der bei einer günstigen Notation der Sequenznummern, etwa als Potenz zur Basis 2, sich im Ergebnis als Binärfeld darstellt und in gebräuchlichen Datenformaten, z. B. als Langwort, die Verwendung von zweiunddreißig aufeinander folgenden Sequenznummern kodieren kann.

Zur Erhöhung der Geschwindigkeit bei der Auswertung des Vektors in Bezug auf evtl. vergebene Sequenznummern ist vorgegeben, dass von dem Vektor zur Erkennung evtl. Duplikate nur ein Abschnitt vorgegebener oder vorgebbarer Größe betrachtet wird. Der Abschnitt wird zeitabhängig oder in Abhängigkeit vom Empfang einzelner, vom Abschnitt umfasster Telegramme verschoben. Schreib- und Lesezugriffe auf den Vektor werden mittels eines Offsets verwaltet, so dass auch bei einem Vektor endlicher Größe theoretisch unendlich große Sequenznummern verwaltet werden können. Nachdem unendlich große Sequenznummern bei einer Implementierung des Verfahrens in Software nicht möglich sind und sich eine tatsächliche Größenbegrenzung der Sequenznummern durch die jeweils verwendeten Datentypen ergibt, werden ab einem Überlauf der jeweils verwendeten Datentypen, also quasi automatisch, oder durch

Überwachung bestimmter Grenz- oder Schwellwerte entsprechend der jeweiligen Softwareimplementation nach Erreichen des Überlaufpunkts oder des Grenzwertes automatisch wieder kleinere Sequenznummern verwendet, deren erneute Verwendung in der Praxis keinen Bedenken begegnet, weil durch die Größe des verwendeten Zahlenraums als sicher gelten kann, dass die letzte Verwendung derselben Sequenznummer ausreichend lange zurückliegt, so dass eine ausreichend genaue Identifizierung der Telegramme weiterhin möglich ist.

Um auch im Zusammenhang eines solchen Überlaufs noch Telegramme als Duplikate erkennen zu können, die mit Sequenznummern vor einem solchen Überlauf versehen wurden, sowie auch solche Telegramme, die bereits mit Sequenznummern nach dem Überlauf versehen sind, ist vorgesehen, dass der Vektor zirkulär organisiert ist, so dass der zeitliche Zusammenhang zwischen Sequenznummern vor einem Überlauf und Sequenznummern nach einem Überlauf erhalten bleibt.

Genauso wie Schreib- und Lesezugriffe auf den Vektor mittels eines Offsets verwaltet werden, lässt sich auch der Abschnitt über den Vektor mittels eines Abschnittsoffset verschieben, so dass die Überprüfung, ob ein empfangenes Telegramm ein Duplikat darstellt, auf einfache arithmetische Operationen (Addition oder Subtraktion) und einen Vergleichsvorgang zurückgeführt ist.

Das oben skizzierte Verfahren mit seinen Ausgestaltungen, das nachfolgend näher beschrieben wird, ist bevorzugt auch in Software implementiert, wobei hier von dem Begriff softwareimplemeniert auch solche Implementierungen umfasst sind, bei denen das Verfahren als Logik (z.B. in einem ASIC, FPGA und dergleichen) oder Microcode in einer als Verteiler- oder Netzwerknoten fungierenden Netzwerkkomponente implementiert ist, so dass die Erfindung auch ein Computerprogramm zur Ausführung des Verfahrens, wie hier und nachfolgend beschrieben, betrifft. Das Computerprogramm (der Microcode, die Logik, usw.) umfasst dazu an sich bekannte Programmcodeanweisungen, wie sie zur Implementierung des Verfahrens erforderlich sind. In gleicher Weise betrifft die Erfindung auch einen Datenträger mit einem solchen Computerprogramm oder ein Computersystem, nämlich einen Kommunikationsteilnehmer in einem Automatisierungssystem, insbesondere ein Automatisierungsgerät als Beispiel für einen derartigen Kommunikationsteilnehmer, auf den ein solches Computerprogramm geladen ist.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen. Das oder jedes Ausführungsbeispiel ist nicht als Einschränkung der Erfindung zu verstehen. Vielmehr sind im Rahmen der vorliegenden Offenbarung zahlreiche Abänderungen und Modifikationen möglich, insbesondere solche Varianten und Kombinationen, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen
- FIG 1: eine schematisch vereinfachte Darstellung eines Auto- matisierungssystems mit davon umfassten, durch ein Netzwerk kommunikativ verbundenen Kommunikationsteil- nehmern, von denen zumindest einzelne als Netzwerk- komponente gemäß der vorliegenden Erfindung ausge- führt sind,
- FIG 2: eine schematisch vereinfachte Darstellung einer sol- chen Netzwerkkomponente,
- FIG 3: eine Darstellung zur Verdeutlichung von bei einer Da- tenübertragung im Automatisierungssystem verwendeten Bezeichnern der einzelnen Kommunikationsteilnehmer,
- FIG 4: einen Ausschnitt aus dem Automatisierungssystem gemäß FIG 1, wobei die dargestellte Linie mit einem Einlei- tungspunkt über den Einleitungspunkt zu einem Ring geschlossen wird, so dass Telegramme in der Linie und dem dazu gebildeten Ring sowohl in Richtung einer Hierarchie vergebener Aliasbezeichnungen als auch in Gegenrichtung weitergeleitet werden,
- FIG 5: eine im Wesentlichen der Darstellung in FIG 4 ent- sprechende Darstellung zur Verdeutlichung, dass eine redundante Weiterleitung von Telegrammen auch über eine zu einem Ring geschlossene Linie hinweg möglich ist und das sichere Erreichen eines außerhalb der Li- nie befindlichen Kommunikationsteilnehmers sicher- stellt und
- FIG 6: eine schematisch vereinfachte Darstellung einer in der Beschreibung als Vektor bezeichneten Datenstruk- tur, in der zur Erkennung von Telegrammduplikaten vergebene Sequenznummern gespeichert werden.

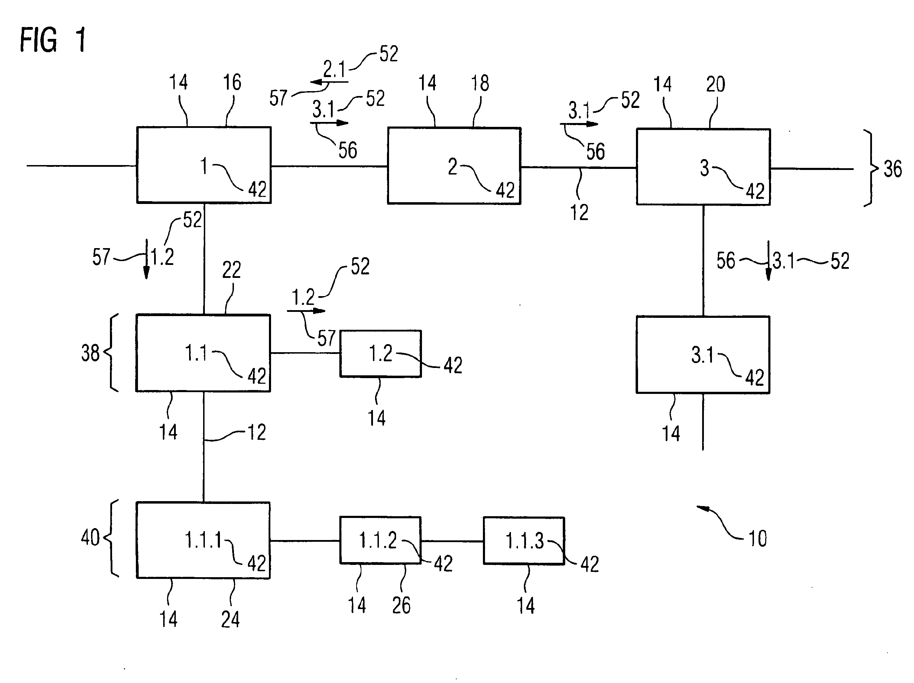

FIG 1 zeigt eine schematisch vereinfachte Darstellung eines insgesamt mit 10 bezeichneten Automatisierungssystems. Das Automatisierungssystem 10 umfasst eine Anzahl von in einem Netzwerk 12 zusammengefassten und insoweit kommunikativ miteinander verbundenen Kommunikationsteilnehmern 14.

Bei einzelnen oder allen Kommunikationsteilnehmern 14 handelt es sich um Automatisierungsgeräte, also z. B. Steuerungen, wie speicherprogrammierbare Steuerungen, so genannte dezentrale Peripheriegeräte, Prozessrechner, (Industrie-)Computer und dergleichen oder Antriebssteuerungen, Frequenzumrichter und ähnliches, also Geräte, Einrichtungen oder Systeme, wie sie zur Steuerung, Regelung und/oder Überwachung technologischer Prozesse, z. B. zum Umformen oder Transportieren von Material, Energie oder Information etc., eingesetzt werden oder einsetzbar sind, wobei insbesondere über geeignete technische Einrichtungen, wie z. B. Sensoren oder Aktoren, Energie aufgewandt oder gewandelt wird. Dargestellt ist jeweils nur der Kommunikationsteilnehmer 14 in schematisch vereinfachter Form. Je nach Betrachtungsweise kann ein solcher Kommunikationsteilnehmer auch als Bestandteil eines Automatisierungsgerätes der oben beschriebenen Art aufgefasst werden, derart, dass er die Funktionalität des jeweiligen Automatisierungsgeräts um Kommunikationsfunktionalitäten ergänzt.

Einzelne Kommunikationsteilnehmer 14 können als Netzwerkkomponenten 16, 18, 20, 22, 24, 26 im Sinne der vorliegenden Erfindung ausgeführt sein. Nachfolgend wird nur noch auf einzelne Kommunikationsteilnehmer 14 oder derartige Netzwerkkomponenten 16-26 oder eine einzelne derartige Netzwerkkomponente 16-26 Bezug genommen, da es für das Verständnis der Erfindung nicht darauf ankommt, ob die Netzwerkkomponente 16-26 Bestandteil eines umfassenderen Systems, z. B. einer speicherprogrammierbaren Steuerung, ist oder ob die Netzwerkkomponente 16-26 ohne darüber hinausgehende Funktionalität Bestandteil des Automatisierungssystems 10 ist. Tatsächlich können einzelne Netzwerkkomponenten 16-26 als Ersatz bisheriger so genannter Switches als Kommunikationsteilnehmer 14 in dem Automatisierungssystem 10 vorgesehen sein, wo sie einzelne Segmente des Netzwerks 12 miteinander verbinden. Andererseits können einzelne Netzwerkkomponenten 16-26 Bestandteil z. B. einer speicherprogrammierbaren Steuerung, eines Leitrechners oder dergleichen sein und darin die gleiche Funktionalität wie eine eigenständige Netzwerkkomponente 16-26 bereitstellen. Die weitere Beschreibung bezieht sich folglich nur noch auf Kommunikationsteilnehmer 14 und Netzwerkkomponenten 16-26.

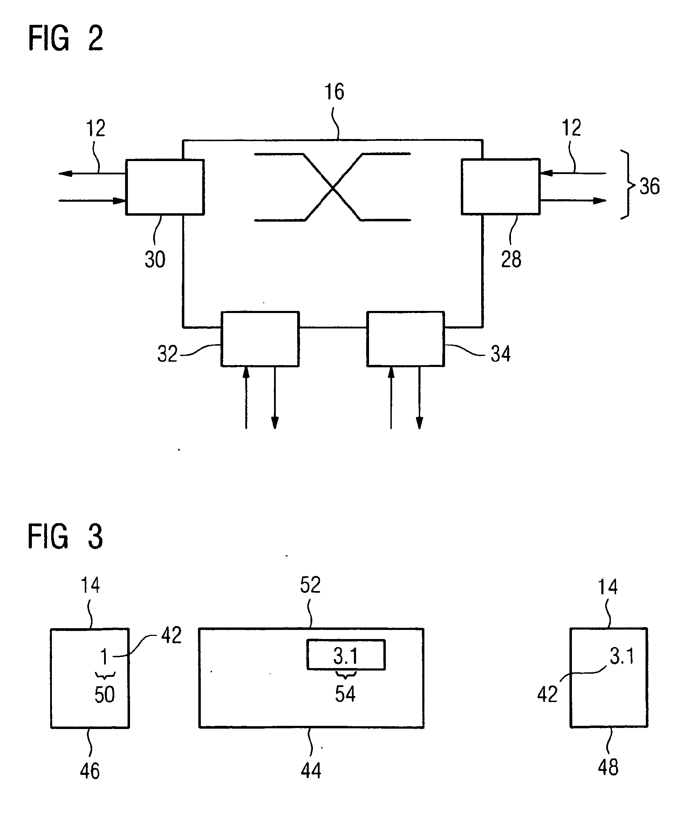

FIG 2 zeigt eine einzelne Netzwerkkomponente 16. Diese umfasst einen ersten Ein- und Ausgangsport 28, einen zweiten Ein- und Ausgangsport 30 und einen dritten Ein- und Ausgangsport 32. In besonderen Ausführungen der Netzwerkkomponente 16 kann ein vierter Ein- und Ausgangsports 34 und evtl. weitere Ein- und Ausgangsports vorgesehen sein. Die Beschreibung wird fortgesetzt für Netzwerkkomponenten 16-26, die zumindest einen ersten, zweiten und dritten Ein- und Ausgangsport 28-32 - im Folgenden kurz als Port 28, 30, 32 bezeichnet - umfassen. In speziellen Anwendungen ist es auch möglich, dass eine Netzwerkkomponente auch nur zwei Ports umfasst. Diese können recht vorteilhaft einfach implementiert werden. Virtuell haben diese oft einen dritten nicht sichtbaren Port, an dem die Applikation angekoppelt ist.

Jede Netzwerkkomponente 16-26 kann über jeden der Ports 28-32 Daten aus dem Automatisierungssystem 10 empfangen oder Daten im Automatisierungssystem 10 weiterleiten. Über den ersten und zweiten Port 28, 30 besteht oder wird hergestellt eine Verbindung zu anderen Kommunikationsteilnehmern 14, insbesondere zu anderen Netzwerkkomponenten 18-26, die mit der jeweiligen Netzwerkkomponente 16, von der die Verbindung ausgeht, einer hierarchisch gleichen Linie 36 (vgl. auch FIG 1) der Kommunikationsverbindungen in dem Automatisierungssystem 10 angehören. Über den dritten und evtl. vierten und ggf. weitere Ports 32, 34 besteht oder ist herstellbar eine Anbindung an andere Kommunikationsteilnehmer 14, insbesondere an andere Netzwerkkomponenten 22, 24, in einer hierarchisch untergeordneten Linie 38, 40 (vgl. FIG 1).

Der erste und der zweite Port 28, 30 sind damit exklusiv für Datenübertragungen innerhalb einer hierarchisch gleichen Linie 36 vorgesehen, während der dritte und jeder eventuelle weitere Port 32, 34 exklusiv für Datenübertragungen in eine hierarchisch untergeordneten Linie 38, 40 vorgesehen sind. Durch eine solche eindeutige Zuordnung lässt sich die Datenübertragung in dem Automatisierungssystem 10 nach einem fixen Schema organisieren, welches das Auffinden eines gültigen Kommunikationspfades zu einem Zielkommunikationsteilnehmer 14 erleichtert, ohne dass dazu in den einzelnen entlang des Kommunikationspfades passierten Kommunikationsteilnehmern 14 umfangreiche Daten über mittel- oder unmittelbar benachbarte Kommunikationsteilnehmer 14 gespeichert werden müssen. Zudem lässt sich der Datendurchsatz in dem Automatisierungssystem 10 erhöhen, indem nach bisherigen Lösungen gemäß dem Stand der Technik unvermeidliche parallele Datenübertragungen über mehrere Ports 28-32, 34 der gleichen Netzwerkkomponente 16-26 vermieden werden.

In FIG 1 ist jeder Kommunikationsteilnehmer 14 mit einem im Folgenden auch Alias 42 genannten Bezeichner dargestellt. Den von der hierarchisch höchsten Linie 36 umfassten Netzwerkkomponenten 16, 18, 20 sind in der dargestellten Reihenfolge die Bezeichner "1", "2" und "3" als Alias 42 zugeordnet. Hierarchisch unterhalb der Netzwerkkomponente 16 mit dem Bezeichner "1" als Alias 42 umfasst das Automatisierungssystem 10 zwei weitere jeweils hierarchisch gleiche Linien 38, 40 mit davon umfassten Kommunikationsteilnehmern 14 denen jeweils die Bezeichner "1.1", "1.2" bzw. "1.1.1", "1.1.2" und "1.1.3" als Alias 42 zugeordnet sind.

Jeder Alias 42 wird im Automatisierungssystem 10 einem Kommunikationsteilnehmer 14 eindeutig zugewiesen. Dazu wird das nachfolgend beschriebene Bildungsschema verwendet: Zunächst wird ausgehend von einem zentralen Kommunikationsteilnehmer 14, dem aufgrund seiner Eigenschaft als zentraler Kommunikationsteilnehmer 14 ein initialer Alias 42, also z. B. "1", zugewiesen wird, für alle Kommunikationsteilnehmer 14, die mit dem zentralen Kommunikationsteilnehmer 14 in einer hierarchisch gleichen Linie 36 verbunden sind, ein eine erste Ebene der Kommunikationsverbindungen in dem Automatisierungssystem 10 bezeichnender Bestandteil des jeweiligen Alias 42 dieses Kommunikationsteilnehmers 14 mit einem Abstand vom zentralen Kommunikationsteilnehmer erhöht. Mit anderen Worten: Ausgehend von dem initialen Alias 42 mit dem Wert "1" wird ein die gleiche Ebene der Kommunikationsverbindungen bezeichnender Bestandteil des jeweiligen Alias 42 erhöht. Es ergeben sich also für die dem zentralen Kommunikationsteilnehmer 14 nachfolgenden Netzwerkkomponenten 18, 20 als Alias 42 die Bezeichner "2" bzw. "3".

Für alle auf diese Weise erreichten Kommunikationsteilnehmer 14, bei denen es sich um Netzwerkkomponenten 16-26 der hier beschriebenen Art handelt und mit denen über deren dritten Port 32 mittel- oder unmittelbar zumindest ein Kommunikationsteilnehmer 14 verbunden ist, wird für diesen Kommunikationsteilnehmer 14 ein Alias 42 vergeben, der aus dem Alias der hierarchisch übergeordneten Netzwerkkomponente 16-20 durch Hinzufügung eines eine hierarchisch untergeordnete Ebene der Kommunikationsverbindungen in dem Automatisierungssystem 10 bezeichnenden Bestandteils gebildet wird. Für die Netzwerkkomponente 16, der als Alias 42 der Bezeichner "1" zugewiesen ist, wird für die über dessen dritten Port 32 erreichbare Netzwerkkomponente 22 als Alias 42 entsprechend der Bezeichner "1.1" vergeben, wobei die Hinzufügung des Bestandteils ".1" die hierarchisch untergeordnete Ebene der Kommunikationsverbindungen in dem Automatisierungssystem 10 bezeichnet. Entsprechendes gilt für die Netzwerkkomponente 20, der als Alias 42 der Bezeichner "3" zugeordnet ist und dessen über deren dritten Port 32 erreichbarem Nachfolger als Bezeichner der Alias 42 "3.1" zugeordnet ist, wobei auch hier der hinzugefügte Bestandteil ".1" eine hierarchisch untergeordnete Ebene bezeichnet. Für in einer hierarchisch untergeordneten Ebene, also z. B. die der Linie 38 nachfolgende, weitere untergeordnete Linie 40, werden entsprechend weitere derartige Bestandteile dem jeweiligen Alias 42 hinzugefügt, so dass sich für die in FIG 1 mit der Bezugsziffer 24 bezeichnete Netzwerkkomponente 24 als Alias 42 der Bezeichner "1.1.1" ergibt. Wenn der Kommunikationsteilnehmer 14, der in FIG 1 mit dem Bezeichner "1.2" als Alias 42 dargestellt ist, als Netzwerkkomponente 16-26 ausgeführt ist und über dessen dritten Port 32 weitere Kommunikationsteilnehmer 14 angeschlossen wären, ergäbe sich für einen ersten derartigen Kommunikationsteilnehmer 14 ein Bezeichner "1.2.1" als Alias 42, und so weiter.

Für alle Netzwerkkomponenten 16-26, denen gemäß den zuletzt beschriebenen Maßnahmen ein Alias zugewiesen wurde, der einen Bestandteil umfasst, der eine hierarchisch untergeordnete Ebene bezeichnet, werden sämtliche oben beschriebenen Maßnahmen des Bildungsschemas wiederholt, wobei die jeweilige Netzwerkkomponente an die Stelle des zentralen Kommunikationsteilnehmers 14 und die jeweilige hierarchische Ebene 36, 38, 40 an die Stelle der ersten Ebene 36 der Kommunikationsverbindungen tritt. Das Bildungsschema ist also ein rekursives Bildungsschema und am Ende der Rekursion ist allen von dem Automatisierungssystem umfassten Kommunikationsteilnehmern 14 ein eindeutiger Alias 42 zugewiesen.

Die Übermittlung von Daten zwischen einzelnen Kommunikationsteilnehmern 14 in einem solchen Automatisierungssystem wird nachfolgend anhand FIG 3 mit Bezugnahme auf FIG 1 und FIG 2 beschrieben. FIG 3 zeigt schematisch vereinfacht ein Telegramm 44, also eine Organisationsform von über das Netzwerk 12 (FIG 1) zu übermittelnden Daten, z. B. ein so genanntes Frame mit zumindest einem davon umfassten Datagramm. Das Telegramm 44 wird von einem als Sender 46 fungierenden Kommunikationsteilnehmer 14 versandt und ist für einen als Empfänger 48 fungierenden Kommunikationsteilnehmer 14 bestimmt. Der Empfänger 48 wird ggf. auch als Zielkommunikationsteilnehmer bezeichnet und, nachdem grundsätzlich jeder Kommunikationsteilnehmer 14 als Zielkommunikationsteilnehmer in Betracht kommen kann, ggf. auch verallgemeinernd mit dem Bezugszeichen 14 bezeichnet.

Für die weitere Beschreibung soll davon ausgegangen werden, dass das Telegramm 44 von der in FIG 1 mit dem Bezeichner "1" als Alias 42 dargestellten Netzwerkkomponente 16 (Sender 46) an den in FIG 1 mit dem Bezeichner "3.1" als Alias 42 dargestellten Kommunikationsteilnehmer 14 (Empfänger 48) gesendet werden soll. Dazu umfasst das Telegramm 44 als Zielalias den Alias 42 des Zielkommunikationsteilnehmers 14. Allgemein gilt, dass in dem Automatisierungssystem 10 zwischen den Kommunikationsteilnehmern 14 versandte Telegramme 44 einen Empfänger 48 oder Zielkommunikationsteilnehmer 14 zumindest auch anhand dessen Alias 42 bezeichnen.

Sobald das Telegramm 44 im Sender 46 zur Weiterleitung, also zur Einspeisung in das Netzwerk 12, bereitsteht, ist für den Sender 46 zu entscheiden, über welchen der von dem Sender 46 umfassten Ports 28-34 eine Weiterleitung erfolgen soll. Dazu wird zunächst ein die eigene Ebene des Senders 46 bezeichnender Bestandteil des eigenen Alias 42, also "1", als relevanter eigener Aliasabschnitt 50 betrachtet. Daneben wird von einem Alias 42 des Empfängers 48 (Zielalias 52) ebenfalls ein entsprechender relevanter Bestandteil gebildet und als relevanter Zielaliasabschnitt 54 weiter verwendet. Solange der relevante eigene Aliasabschnitt 50 und der relevante Zielaliasabschnitt 54 in dieser Reihenfolge einer "kleiner gleich"-Relation genügen, wird das Telegramm 44 über den ersten Port 28 der betreffenden Netzwerkkomponente 16 bis 26 weitergeleitet. Auf diese Weise gelangt das in FIG 3 dargestellte Telegramm 44 zunächst von der in FIG 1 mit dem Bezeichner "1" als Alias 42 bezeichneten Netzwerkkomponente 16 zu der mit dem Bezeichner "2" als Alias 42 bezeichneten Netzwerkkomponente 18 und schließlich zu der mit dem Bezeichner "3" als Alias 42 bezeichneten Netzwerkkomponente 20. Hier ist für den Vergleich von relevantem eigenem Aliasabschnitt 50 und relevantem Zielaliasabschnitt 54 die bisher erfüllte "kleiner gleich"-Relation nicht mehr erfüllt, stattdessen ist eine "ist gleich"-Relation erfüllt, die hier bewirkt, dass das Telegramm 44 über den dritten Port 32 weitergeleitet wird und damit zum Empfänger 48 gelangt ist.

Die gleiche Kommunikation ist in FIG 1 auch mit einer ersten Gruppe von Pfeilen 56 verdeutlicht, wobei neben jedem Pfeil 56 jeweils der Zielalias 52 angegeben ist und ein Pfeil 56 zusammen mit einem Zielalias 52 auch als andere Darstellung eines Telegramms 44 (FIG 3) aufgefasst werden kann. Wenn zu einem späteren Zeitpunkt ein Telegramm 44 von der in FIG 1 mit dem Bezeichner "2" als Alias 42 dargestellten Netzwerkkomponente 18 an den mit dem Bezeichner "1.2" als Alias 42 dargestellten Kommunikationsteilnehmer 14 gesendet werden soll, ergeben sich grundsätzlich analoge Verhältnisse, die nachfolgend mit Bezug auf weitere Pfeile 58 in Verbindung mit einem Zielalias 52, wie in FIG 1 dargestellt, erläutert werden. Danach ergibt sich, dass, sobald das Telegramm 44 in der als Sender 46 fungierenden Netzwerkkomponente 18 zum Versenden bereitsteht, zunächst der relevante eigene Aliasabschnitt 50, also "2", mit dem relevanten Zielaliasabschnitt 52, also "1", verglichen wird. Diesmal genügen die relevanten Aliasabschnitte 50, 54 einer "größer gleich"-Relation, so dass zum Weiterleiten des Telegramms 44 der zweite Port 30 ausgewählt wird. Damit gelangt das Telegramm 44 zu der in FIG 1 mit dem Bezeichner "1" als Alias 42 dargestellten Netzwerkkomponente 16. Hier ergibt sich beim Vergleich von relevantem eigenen Aliasabschnitt 50 und relevantem Zielaliasabschnitt 54 eine Identität, so dass für die Weiterleitung des Telegramms 44 der dritte Port 32 ausgewählt wird. Damit gelangt das Telegramm 44 in die zweite Ebene 38, ist aber noch nicht beim Empfänger 48 eingetroffen. Für die Weiterleitung wird jetzt für die mit dem Bezeichner "1.1" als Alias 42 dargestellte Netzwerkkomponente dessen die eigene Ebene bezeichnender Bestandteil des eigenen Alias 42 als relevanter eigener Aliasabschnitt 50 gebildet; hier von "1.1" die letzte Ziffer, also "1". Der entsprechende Bestandteil des Zielalias 52 bezieht sich jetzt auf die gleiche Ebene 38, so dass als relevanter Zielaliasabschnitt 54 des Zielalias 52 sich nunmehr ebenfalls die letzte Ziffer, also "2", ergibt. Damit wird für die Weiterleitung des Telegramms 44 zum Empfänger 48 durch die Netzwerkkomponente 22 der erste Port 28 ausgewählt.

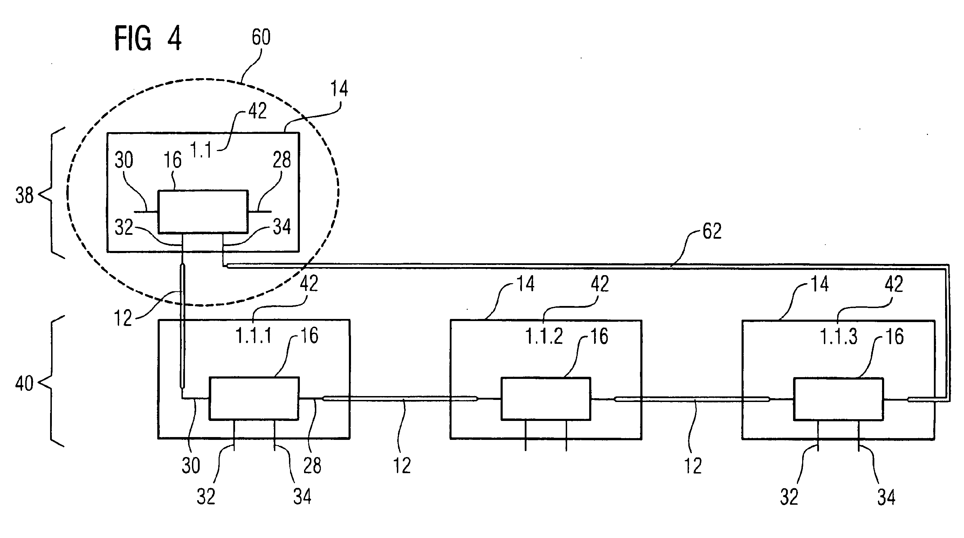

Die oben beschriebene Struktur, bei der die Kommunikationsteilnehmer 14 über Ports 28-34 miteinander verbunden sind und eine Mehrzahl von Kommunikationsteilnehmern 14 jeweils in einer Linie 36-40 zusammengefasst sind und abgesehen von einer obersten Hierarchieebene jede Linie 36-40 genau einen Übergang, an dem diese Linie 36-40 mit einer Linie 36-40 höherer Hierarchie verbunden ist, wird im Folgenden als "vorgegebene Hierarchie" bezeichnet. Die an diese Hierarchie angelehnte Zuweisung jeweils eines Alias 42 an jeden Kommunikationsteilnehmer 14, wie ebenfalls oben beschrieben, wird analog als "jedem Kommunikationsteilnehmer entsprechend der Hierarchie zugeordneter Alias" bezeichnet. FIG 4 zeigt ausgehend von diesem Verständnis eine Situation, mit der eine unterbrechungsfreie Kommunikation sichergestellt wird, auch wenn das Netzwerk 12, also einzelne Netzwerkabschnitte, mithin Verbindungen zwischen einzelnen Kommunikationsteilnehmern 14, unterbrochen sind. Wenn bei der Darstellung in FIG 4 z. B. angenommen wird, dass die Verbindung zwischen dem Kommunikationsteilnehmer 14 mit dem Alias 42 "1.1.2" und dem Kommunikationsteilnehmer 14 mit dem Alias 42 "1.1.3" unterbrochen ist und ein Telegramm 44 vom Kommunikationsteilnehmer 14 mit dem Alias 42 "1.1" an den Kommunikationsteilnehmer 14 hinter der unterbrochenen Verbindung, also dem Kommunikationsteilnehmer 14 mit dem Alias 42 "1.1.3", gesendet werden soll, ist dieser Kommunikationsteilnehmer 14 ohne eine redundante Ausführung der Netzwerkverbindungen zunächst nicht erreichbar. Zur redundanten Ausführung der Netzwerkverbindungen ist vorgesehen, dass jede Linie 36-40 die einen als Einleitungspunkt 60 bezeichneten Übergang von einer Linie 36-40 höherer Hierarchie umfasst, also jede Linie 36-40, die nicht selbst die oberste Hierarchieebene bildet, über den jeweiligen Einleitungspunkt 60 zu einem Ring 62 geschlossen wird. Der Ring 62 geht dabei vom letzten Kommunikationsteilnehmer 14 in der jeweiligen Linie 36-40 aus und wird über einen freien Port 28-32 des Einleitungspunkts 60 geschlossen. Auf diesem Wege bleibt, solange in einer Linie 36-40 maximal eine Unterbrechung auftritt, jeder Kommunikationsteilnehmer 14 erreichbar. Für die Weiterleitung eines Telegramms ist das oben beschriebene Schema, bei dem für einen weiterleitenden Kommunikationsteilnehmer 14 jeweils der relevante eigene Aliasabschnitt 50 und ein relevanter Zielaliasabschnitt 54 in Relation gesetzt werden, erweitert, derart, dass, wenn relevanter eigener Aliasabschnitt 50 und relevanter Zielaliasabschnitt 54 einer "ist gleich"-Relation genügen, das Telegramm gleichzeitig über den dritten Port 32 und den vierten Port 34 weitergeleitet wird. Die Weiterleitung über den dritten Port 32 bewirkt eine Weiterleitung des Telegramms in Richtung der Hierarchie der vergebenen Aliasbezeichnungen. Die Weiterleitung über den vierten Port 34 bewirkt eine Weiterleitung des Telegramms in Gegenrichtung, also gegen die Richtung der Hierarchie der vergebenen Aliasbezeichnungen. Die Weiterleitung in beide Richtungen bewirkt, dass, selbst wenn innerhalb einer Linie 36-40 eine Verbindung unterbrochen wird, das jeweilige Telegramm 44 entweder in Richtung der Hierarchie der vergebenen Aliasbezeichnungen oder in Gegenrichtung den Empfänger 48 erreicht.

Darüber hinaus gibt es zusätzliche Weiterleitungsregeln, die im Folgenden zumindest kursorisch dargestellt werden sollen: dazu wird der erste Port 28 mit dem Buchstaben S, der zweite Port 30 mit dem Buchstaben P, der dritte Port 32 mit dem Buchstaben B und der vierte Port 34 mit dem Buchstaben B' bezeichnet. Telegramme 44, die an einem Einleitungspunkt 60 über den zweiten Port 30 (Port P) zur Weiterleitung über den dritten Port 32 (Port B) empfangen werden, werden - wie oben beschrieben - immer auch über den vierten Port 34 (Port B') weitergeleitet. Mit der soeben eingeführten Notation kann die Weiterleitungsstrategie für eine redundante Übermittlung von Telegrammen tabellarisch wie folgt dargestellt werden:

| empfangen an | zum Weiterleiten über | zusätzliche Weiterleitung über |
|---|---|---|
| P | B | B' |
| S | B | B' |
| B | B | B' |
| B' | B | B |
| B | P | S |
| B | S | P |
| P | P | S |
| S | S | P |

Wenn bei einem Einleitungspunkt 60 kein Kommunikationsteilnehmer 14 mit einem dritten und vierten Port 32, 34 zur Verfügung steht, können als Einleitungspunkt zwei Kommunikationsteilnehmer 14 und von diesen beiden Kommunikationsteilnehmern 14 jeweils deren dritter Port 32 verwendet werden. Diese Anordnung ist auch deshalb vorteilhaft, weil nun bei Ausfall eines der Kommunikationsteilnehmer 14, die jetzt paarig (redundant) als Einleitungspunkt 60 fungieren, nicht die komplette Kommunikation zu der unterlagerten Ebene abgebrochen ist, weil die unterlagerte Ebene immer noch über den nicht ausgefallenen Kommunikationsteilnehmer 14 möglich ist. Der dritte Port 32 des zweiten Kommunikationsteilnehmers 14 eines solchen Einleitungspunkts übernimmt dann die Funktion des vorstehend mit P',S',B' bezeichneten Ports auf dem weiteren Knoten und eine evtl. Weiterleitung auf diesen Port umfasst stets auch einen Übergang zwischen den beiden den Einleitungspunkt 60 bildenden Kommunikationsteilnehmern 14. Damit kann das Weiterleitungsschema analog zu dem oben bereits formulierten Schema wie folgt ausgedrückt werden:

| empfangen an | zum Weiterleiten über | zusätzliche Weiterleitung über |
|---|---|---|
| B | B | über S an B' |
| B' | B | über P' an B |
| P | B | über S an B' |
| S | B | |
| P' | B | B' |
| S' | B | B' |

Wenn ein Telegramm 44 von zwei Richtungen, also einmal in Richtung der Hierarchie der vergebenen Aliasbezeichnungen und in Gegenrichtung in eine Linie 36-40 weitergeleitet wird, ergibt sich ein Duplikat des Telegramms 44, das zu einer zusätzlichen Kommunikationsbelastung führt, die zunächst unvermeidbar ist. Spätestens wenn ein Telegramm 44 einen bereits passierten Einleitungspunkt 60 nochmals erreicht, kann das Telegramm 44 allerdings eliminiert werden, so dass die unvermeidliche zusätzliche Belastung in engen Grenzen gehalten wird. Wenn z. B. gemäß der in FIG 4 dargestellten Situation ein Broadcast- oder Multicasttelegramm, also ein Telegramm 44, das an alle Kommunikationsteilnehmer 14 oder eine Mehrzahl von Kommunikationsteilnehmern 14 gerichtet ist, über den Kommunikationsteilnehmer 14 mit dem Alias 42 "1.1" als Einleitungspunkt 60 in die sich daran anschließende Linie 40 weitergeleitet wird, treffen sowohl das Telegramm 44, das über den dritten Port 32 entlang der Richtung der Hierarchie der vergebenen Aliasbezeichnungen als auch das Duplikat des Telegramms 44, das in Gegenrichtung, also über den vierten Port 34, weitergeleitet wird, in endlicher Zeit beim Einleitungspunkt 60 wieder ein. Dort wird erkannt, dass das Telegramm 44 oder das Duplikat den Einleitungspunkt 60 bereits einmal passiert hat und jetzt entsprechend den Einleitungspunkt 60 erneut erreicht und wird ausgehend von dieser Feststellung eliminiert.

Für eine solche Auswertung, also die Erkennung, ob ein Telegramm 44 bereits einmal weitergeleitet wurde und den Einleitungspunkt 60 jetzt erneut erreicht, werden Bezeichner, die den jeweiligen Sender und Empfänger referenzieren, ausgewertet. Allerdings kann es vorkommen, dass bestimmte Sender-Empfänger-Beziehungen häufig vorkommen, so dass nur mit diesen Informationen keine ausreichend sichere Duplikaterkennung möglich ist. Dazu ist dann vorgesehen, dass Telegramme um eine Sequenznummer ergänzt werden und Telegrammduplikate zumindest auch anhand gleicher Sequenznummern erkannt und eliminiert werden.

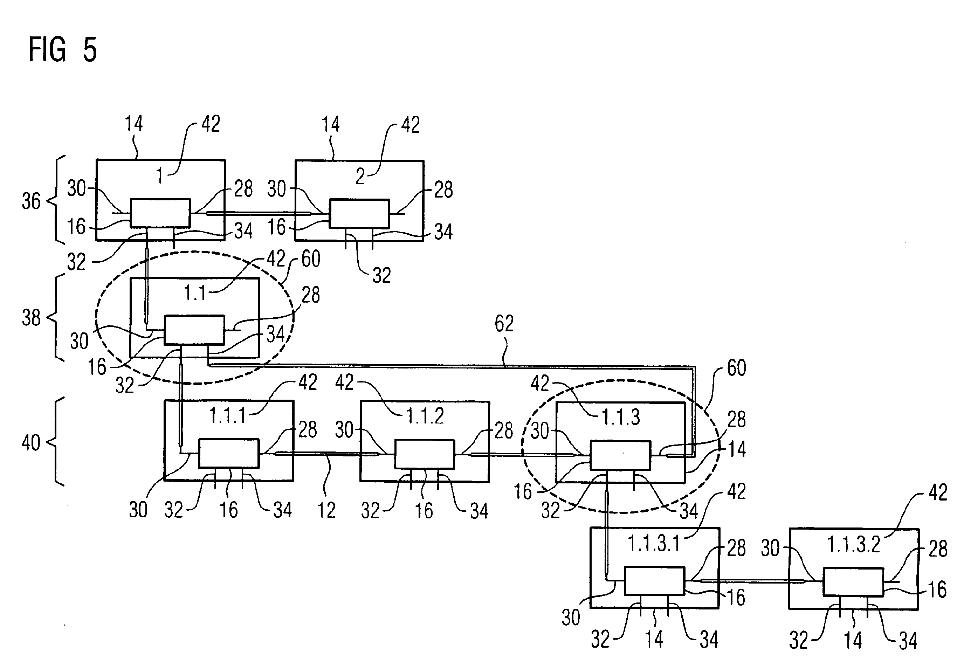

Die Darstellung in FIG 5 greift im Wesentlichen die Darstellung aus FIG 4 auf und soll verdeutlichen, dass die redundante Übermittlung von Telegrammen wie vorstehend beschrieben nicht nur für Kommunikationsbeziehungen innerhalb einer Linie 36-40, sondern auch für Kommunikationsbeziehungen, die über eine oder mehrere redundant ausgeführte Linien hinwegreichen, verwendbar ist. Wenn gemäß der in FIG 5 dargestellten Situation der Kommunikationsteilnehmer 14 mit dem Alias 42 "1.1.3.2" ein Telegramm 44 an den Kommunikationsteilnehmer 14 mit dem Alias 42 "2" sendet, wird das Telegramm 44 ab dem Kommunikationsteilnehmer 14 mit dem Alias 42 "1.1.3" in der Linie 40, der dieser Kommunikationsteilnehmer 14 zugehört, sowohl in Richtung der vergebenen Aliasbezeichnungen als auch in Gegenrichtung weitergeleitet, so dass auch bei einer Unterbrechung der Verbindung in dieser Linie 40 das Telegramm 44 den Empfänger, also den Kommunikationsteilnehmer 14 mit dem Alias 42 "2" noch erreicht. Gleiches gilt entsprechend für eine "umgekehrte" Kommunikationsrichtung, beispielsweise für ein vom Kommunikationsteilnehmer 14 mit dem Alias 42 "1" an den Kommunikationsteilnehmer 14 mit dem Alias 42 "1.1.3.1" zu sendendes Telegramm 44.

Nachdem sich Duplikate von Telegrammen nur bei ein- oder ausspeisenden Knoten, d. h. an einem Einleitungspunkt 60, der je nach Kommunikationsrichtung auch als Ausleitungspunkt aufgefasst werden kann, ergeben, ist vorgesehen, dass eine Duplikaterkennung nur durch als Einleitungspunkt 60 fungierende Kommunikationsteilnehmer 14 vorgenommen wird. Zirkulierende Telegramme sollen dagegen auch innerhalb einer Linie 36-40 von jedem Knoten, also jedem davon umfassten Kommunikationsteilnehmer 14, erkannt werden. Dazu ist vorgesehen, dass die dafür ausgewerteten Informationen, also zumindest Absenderinformationen, ggf. auch Empfängerinformationen und/oder Einleitungsadresse, ggf. ergänzt um eine Sequenznummer, in einem Telegramm 44 soweit wie möglich "vorne" angeordnet sind, so dass diese Informationen beim Empfang eines Telegramms 44 quasi unmittelbar zur Auswertung zur Verfügung stehen und nicht etwa erst nachdem auch der Nutzdateninhalt eines Telegramms 44 bearbeitet wurde.

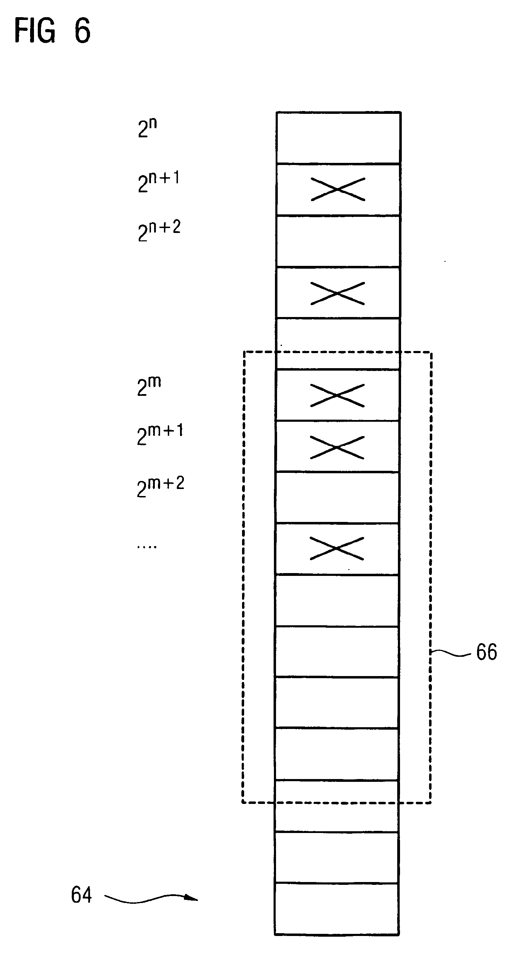

FIG 6 zeigt eine Möglichkeit zur Protokollierung vergebener Sequenznummern. Dazu ist ein Vektor 64 vorgesehen, der eine Anzahl von Positionen umfasst und damit bei der Realisierung des Verfahrens in Software z. B. als Feld, also als Array, implementiert ist. Als Sequenznummern kommen grundsätzlich positive ganze Zahlen in Betracht, also z. B. 1, 2, 3, usw. Nachdem zur eindeutigen Kennzeichnung von Telegrammen 44 stets neue Sequenznummern zu verwenden sind, der Vektor 64 auf der anderen Seite nicht unendlich groß sein kann, ergibt sich die Notwendigkeit, nur eine begrenzte Anzahl von Sequenznummern zu protokollieren, nachdem alte Sequenznummern nach einer bestimmten Zeit kaum noch von Interesse sind, weil davon auszugehen ist, dass etwaige Duplikate bereits eliminiert wurden. Wenn jede Sequenznummer als Potenz zur Basis 2 in den Vektor 64 eingetragen wird, ergibt sich eine leichte Zuordnung zwischen Sequenznummer und Position im Vektor 64. Eine verwendete Sequenznummer, z. B. n+1, kann in den Vektor 64 eingetragen werden und zur Duplikaterkennung wertet ein als Einleitungspunkt 60 fungierender Kommunikationsteilnehmer 14 bei Erhalt eines Telegramms 44 mit derselben Sequenznummer den Vektor 64 an der durch die Sequenznummer spezifizierten Position aus und eliminiert das Telegramm 44, wenn die Sequenznummer aus dem Vektor 64 als belegt hervorgeht. Zur weiteren Optimierung und zur Reduktion der bei der Duplikaterkennung zu überprüfenden Sequenznummern kann vorgesehen sein, dass von dem Vektor 64 nur ein Abschnitt 66 ausgewertet wird, der als über dem Vektor 64 verschiebliches Fenster aufgefasst werden kann. Die Größe des Abschnitts 66 kann vorgegeben sein oder durch einzelne Applikationen zur Laufzeit verändert werden, d. h. durch die jeweilige Applikation zur Laufzeit vorgebbar sein. Wenn eine Sequenznummer erreicht wird, für deren Kodierung im Vektor 64 keine Position mehr frei ist, also z. B. bei einem Vektor 64 mit zweiunddreißig Positionen eine Sequenznummer dreiunddreißig oder größer, ist vorgesehen, dass mit dem Vektor 64 ein Offset assoziiert wird, der vor Belegung einer Position in dem Vektor 64 von der betreffenden Sequenznummer abgezogen wird. Dadurch können theoretisch beliebig große Sequenznummern protokolliert werden, wobei die Größe der Sequenznummern nur durch das jeweils verwendete Datenformat begrenzt ist.

Der Abschnitt 66 wird über den Vektor 64 zeitabhängig oder in Abhängigkeit vom Empfang einzelner vom Abschnitt 66 umfasster Telegramme 44 verschoben, so dass bei optimalen Verhältnissen vom Abschnitt 66 nur solche Kodierungen umfasst sind, zu denen noch mit einem Duplikat gerechnet wird. Der Vektor 64 wird bevorzugt zirkulär verwaltet, wobei sich eine Zirkularität bereits durch einen Überlauf eines jeweils verwendeten Datenformates ergibt, z. B. derart, dass nach einer Sequenznummer 255 und deren Inkrementierung in einem 8-bit breiten Datenformat unmittelbar die Sequenznummer 0 folgt und sich damit gleichsam ein nahtloser Übergang vom Ende des Vektors 64 zu dessen Anfang und damit eine Zirkularität ergibt.

Genauso wie Schreib- und Lesezugriffe auf den Vektor 64 mittels eines Offsets verwaltet werden, wird auch die Position des Abschnitts 66 mittels eines Abschnittsoffsets verschoben.

Damit lässt sich die Erfindung kurz wie folgt darstellen: Die Erfindung betrifft ein Verfahren zur Datenübertragung in einem Automatisierungssystem 10 mit einer Mehrzahl kommunikativ verbundener Kommunikationsteilnehmer 14, wobei die kommunikative Verbindung der Kommunikationsteilnehmer 14 einer vorgegebenen Hierarchie folgt, bei der eine Mehrzahl von Kommunikationsteilnehmern 14 in einer Linie 36 zusammengefasst sind und jedem Kommunikationsteilnehmer 14 ein an die Hierarchie angepasster Alias zugeordnet ist oder wird und wobei in dem Automatisierungssystem 10 versandte Telegramme 44, teilweise auch Datagramm oder Frame genannt, einen Zielkommunikationsteilnehmer 14 zumindest auch anhand dessen Alias 42 bezeichnen, wobei jede Linie 36-40 über deren als Einleitungspunkt 60 bezeichneten Übergang von der nächsthöheren Linie 36-40 über den Einleitungspunkt 60 zu einem Ring 62 geschlossen wird und Telgramme 44 in dem sich mit der Linie 36-40 so ergebenden Ring 62 sowohl in Richtung der Hierarchie der vergebenen Aliasbezeichnungen als auch in Gegenrichtung weiter geleitet werden.

## Patentansprüche

1. Verfahren zur Datenübertragung in einem Automatisierungssystem (10) mit einer Mehrzahl kommunikativ verbundener Kommunikationsteilnehmer (14),
- wobei die kommunikative Verbindung der Kommunikationsteilnehmer (14) einer vorgegebenen Hierarchie folgt, bei der eine Mehrzahl von Kommunikationsteilnehmern (14) in einer Linie (36) zusammengefasst sind und abgesehen von einer obersten Hierarchieebene jede Linie (36-40) genau einen Einleitungspunkt (60) aufweist, der diese Linie (36-40) mit einer Linie höherer Hierarchie verbindet,
- wobei jedem Kommunikationsteilnehmer (14) ein an die Hierarchie angepasster Alias zugeordnet ist oder wird und
- wobei in dem Automatisierungssystem (10) versandte Telegramme (44) einen Zielkommunikationsteilnehmer (14) zumindest auch anhand dessen Alias (42) bezeichnen, und
- wobei jede Linie (36-40) mit einem Einleitungspunkt (60) über den Einleitungspunkt (60) zu einem Ring (62) geschlossen wird,
**dadurch gekennzeichnet,**
- **dass** der jeweiligen Einleitungspunkt (60) für Telegramme ein Abschnitt das eigenen Alias des Einleitungspunkt (60) und ein relevanter Abschnitt des Alias, das in dem Telegramm (44) den Zielkommunikationsteilnehmer bezeichnet, in Relation setzt, und Telegramme (44) in dem Ring (62) in beide Richtungen weiterleitet, wenn ein Abschnitt des eigenen Alias des Einleitungspunkts (60) und ein relevanter Abschnitt des Alias, das in dem Telegramm (44) den Zielkommunikationsteilnehmer (14) bezeichnet, eine bestimmte Relation haben.

2. Verfahren nach Anspruch 1, wobei der jeweilige Einleitungspunkt (60) ein Telegramm (44) eliminiert, wenn das Telegramm (44) nochmals den Einleitungspunkt (60) erreicht.

3. Verfahren nach Anspruch 1 oder 2, wobei Telegramme (44) um eine Sequenznummer ergänzt werden und wobei der jeweilige Einleitungspunkt (60) Telegrammduplikate anhand gleicher Sequenznummern erkennt und eliminiert.

4. Verfahren nach Anspruch 3, wobei eine vergebene Sequenznummer in einem Vektor (64) vermerkt und ein mit der Sequenznummer empfangenes Telegramm (44) anhand des Vektors (64) ggf. als Duplikat erkannt und eliminiert wird.

5. Verfahren nach Anspruch 4, wobei in dem Vektor (64) zur Erkennung evtl. Duplikate ein Abschnitt (66) vorgegebener oder vorgebbarer Größe betrachtet wird.

6. Verfahren nach Anspruch 5, wobei der Abschnitt (66) zeitabhängig oder in Abhängigkeit vom Empfang einzelner vom Abschnitt umfasster Telegramme (44) verschoben wird.

7. Verfahren nach Anspruch 6, wobei der Vektor zirkulär organisiert ist und Schreib- und Lesezugriffe auf den Vektor mittels eines Offsets verwaltet werden.

8. Verfahren nach Anspruch 7, wobei der Abschnitt (66) mittels eines Abschnittsoffsets verschoben wird.

9. Computerprogramm mit Computerprogrammanweisungen zur Ausführung eines Verfahrens gemäß einem der vorangehenden Ansprüche wenn dieses in dem Einleitungspunkt (60) zu einem Ring ausgeführt wird.

10. Datenträger mit einem Computerprogramm nach Anspruch 9.

11. Kommunikationsteilnehmer (14) für ein Automatisierungssystem (10), auf dem ein Computerprogramm nach Anspruch 9 geladen ist.

## Claims

1. Method for transferring data in an automation system (10) having a plurality of communicatively connected communication stations (14),
- whereby the communicative connection of the communication stations (14) follows a predefined hierarchy, in which a plurality of communication stations (14) are grouped together in a line (36) and, apart from a topmost hierarchy level, each line (36-40) has precisely one entry point (60) which connects this line (36-40) to a line of a higher hierarchy,
- whereby an alias matched to the hierarchy is or becomes assigned to each communication station (14), and
- whereby telegrams (44) sent in the automation system (10) designate a destination communication station (14) at least also by means of its alias (42), and
- whereby each line (36-40) with an entry point (60) is closed to form a ring (62) by way of the entry point (60),
**characterised in that**
- the respective entry point (60) for telegrams (44) places a section of the own alias of the entry point (60) in relation to a relevant section of the alias which designates the destination communication station in the telegram (44), and relays telegrams (44) in the ring (62) in both directions, if a section of the own alias of the entry point (60) and a relevant section of the alias which designates the destination communication station (14) in the telegram (44) have a particular relation.

2. Method according to claim 1, whereby the respective entry point (60) eliminates a telegram (44) if the telegram (44) arrives at the entry point (60) again.

3. Method according to claim 1 or 2, whereby telegrams (44) are supplemented with a sequence number and whereby the respective entry point (60) recognises and eliminates telegram duplicates on the basis of identical sequence numbers.

4. Method according to claim 3, whereby an allocated sequence number is noted in a vector (64) and a telegram (44) received with the sequence number is recognised and eliminated where applicable as a duplicate on the basis of the vector (64).

5. Method according to claim 4, whereby a section (66) of predefined or predefinable size is considered in the vector (64) for the recognition of possible duplicates.

6. Method according to claim 5, whereby the section (66) is displaced dependent on time or depending on the receipt of individual telegrams (44) encompassed by the section.

7. Method according to claim 6, whereby the vector is organised in circular fashion and write and read accesses to the vector are managed by means of an offset.

8. Method according to claim 7, whereby the section (66) is displaced by means of a section offset.

9. Computer program with computer program code statements for executing a method in accordance with one of the preceding claims if said program is executed in the entry point (60) to a ring.

10. Data medium containing a computer program according to claim 9.

11. Communication stations (14) in an automation system (10), on which a computer program according to claim 9 is loaded.

## Revendications

1. Procédé de transmission de données dans un système ( 10 ) d'automatisation ayant une pluralité de participants ( 14 ) à la communication reliés en communication,
- dans lequel la liaison en communication des participants ( 14 ) à la communication suit une hiérarchie prescrite, dans laquelle une pluralité de participants ( 14 ) à la communication sont rassemblés dans une ligne ( 36 ) et indépendamment d'un plan hiérarchique le plus haut, chaque ligne ( 36 à 40 ) a exactement un point ( 60 ) d'introduction qui relie cette ligne ( 36 à 40 ) à une ligne de hiérarchie plus haute,
- dans lequel un alias adapté à la hiérarchie est affecté ou sera affecté à chaque participant ( 14 ) à la communication,
- dans lequel des télégrammes ( 44 ) d'activation, envoyés dans le système ( 10 ) d'automatisation, désignent un participant ( 14 ) à la communication destinataire, au moins aussi au moyen de son alias ( 42 ),
- dans lequel chaque ligne ( 36 à 40 ) ayant un point ( 60 ) d'introduction est fermée en un anneau ( 62 ) par le point ( 60 ) d'introduction, **caractérisé**
- **en ce que** le point ( 60 ) respectif d'introduction met en relation, pour des télégrammes, un segment de l'alias propre du point ( 60 ) d'introduction et un segment pertinent de l'alias, qui désigne le participant à la communication destinataire dans le télégramme ( 44 ) et achemine des télégrammes ( 44 ) dans l'anneau ( 62 ) dans les deux sens, lorsqu'un segment de l'alias propre du point ( 60 ) d'introduction et un segment pertinent de l'alias, qui désigne le participant (44) à la communication destinataire dans le télégramme ( 44 ), ont une relation déterminée.

2. Procédé suivant la revendication 1, dans lequel le point ( 60 ) d'introduction respectif élimine un télégramme ( 44 ), si le télégramme (44) atteint encore une fois le point ( 60 ) d'introduction.

3. Procédé suivant la revendication 1 ou 2, dans lequel des télégrammes ( 44 ) sont complétés d'un numéro de séquence et dans lequel le point ( 60 ) d'introduction respectif détecte et élimine des copies de télégramme au moyen du même numéro de séquence.

4. Procédé suivant la revendication 3, dans lequel on marque, dans un vecteur ( 64 ), un numéro de séquence attribué et un télégramme ( 44 ) reçu avec le numéro de séquence est détecté le cas échéant comme copie et est éliminé au moyen du vecteur ( 64 ).

5. Procédé suivant la revendication 4, dans lequel on considère dans le vecteur ( 64 ), pour la détection de copies éventuelles, un segment (66) d'une grandeur prescrite ou pouvant l'être.

6. Procédé suivant la revendication 5, dans lequel le segment ( 66 ) est décalé en fonction du temps ou en fonction de la réception de télégrammes (44) individuels compris dans le segment.

7. Procédé suivant la revendication 6, dans lequel le vecteur est organisé circulairement et des accès en écriture et en lecture au vecteur sont gérés au moyen d'un offset.

8. Procédé suivant la revendication 7, dans lequel le segment ( 66 ) est décalé au moyen d'un offset de segment.

9. Programme informatique ayant des instructions de programmes informatiques pour la mise en oeuvre suivant l'une des revendications précédentes, lorsque celui-ci est réalisé en un anneau dans le point ( 60 ) d'introduction.

10. Support de données ayant un programme informatique suivant la revendication 9.

11. Participant (14) à une communication pour un système ( 10 ) d'automatisation, sur lequel un programme informatique suivant la revendication 9 est chargé.
